# EUROPEAN PATENT APPLICATION

(11) **EP 2 511 851 A2**
(43) Date of publication of application: **17.10.2012**
(21) Application number: 12163777.1
(22) Date of filing: 11.04.2012
(51) Int. Cl.: G06K 7/00

(54) **Storage card socket, mobile terminal and method for protecting the storage card**

(30) Priority: 15.04.2011 CN 201110095203; 06.04.2012 US 201213441036
(71) Applicant: Sony Ericsson Mobile Communications AB, 221 88 Lund (SE)
(72) Inventor: Liu, Yinong, 100102 Beijing (CN); Li, Lingchang, 100102 Beijing (CN); Tian, Xiyong, 100102 Beijing (CN)
(74) Representative: Aurell, Henrik

(57) **Abstract**

A storage card socket (100), mobile terminal and method for protecting the storage card, the storage card socket comprising: a first contact point (103) on the base (102) of the storage card socket; a second contact point (104) on the base (102) of the storage card socket, the second contact point (104) electrically connected to the first contact point (103) after the upper lid (101) of the storage card socket is closed; and a guide slot (105) on the base of the storage card socket, the guide slot being positioned at a side of a connecting part connecting the base (102) and the upper lid (101), the connecting part being positioned in the guide slot (105) so that the upper lid is slidable along the guide slot.

## Description

### Technical Field

The present invention relates to a storage card socket, and in particular to a storage card socket, mobile terminal and method for protecting the storage card.

### Background Art

A storage card uses a flash memory as a storage medium, which consumes much less power in writing and reading data. Therefore, it is widely used in portable information equipment, such as a mobile phone, and a personal digital assistant (PDA), etc. The existing storage cards may comprise a secure digital (SD) card, a subscriber identity module (SIM), and a multi-media card (MMC), etc.

A storage card may be connected to portable information equipment via a storage card socket (also referred to as a socket connector), wherein the storage card may be inserted into the storage card socket, and then the storage card socket is mounted in the portable information equipment, thereby achieving the connection of the storage card and the portable information equipment. Thus, storage cards of different shapes may be mounted in one portable information equipment, improving the compatibility.

Currently, a storage card may store more and more information and becomes an indispensable part of portable information equipment. For example, in a mobile phone using the Android operational system, the SD card becomes a concentrated part of the whole storage system. In a next generation standard, a case where the information of an application is moved from the internal flash memory to the SD card, or the information is moved from the SD card to the internal flash memory is possible to exist. Thus, the read-write protection of the memory card is more and more important.

However, in the implementation of the embodiments of the present invention, the applicant found that following defects existed in the art: since no protection device for read-write protection is disposed in the memory card socket, it will result in the loss of data if the storage card is moved when the storage card is reading or writing data; and it is possible to damage the storage card, increasing the return rate of the storage card.

### Summary of the Invention

The embodiments of the present invention provide a storage card socket, mobile terminal and method for protecting the storage card, aiming at terminating the read-write operation of the storage card when the upper lid of the storage card socket is opened or moved, protecting the storage card in time.

According to one aspect of the present invention, there is provided a storage card socket comprising an upper lid and a base, wherein the storage card socket further comprises:
a first contact point arranged on the base;
a second contact point arranged on the base, the second contact point being electrically connected to the first contact point after the upper lid is closed, and electrically disconnected from the first contact point after the upper lid is opened or moved; and
a guide slot arranged on the base, the guide slot being positioned at a side of a connecting part for connecting the base and the upper lid, the connecting part being embedded in the guide slot so that the upper lid is slidable along the guide slot.

According to another aspect of the present invention, the second contact point is electrically connected to an end of a resistor, and the other end of the resistor is connected to a preset first voltage; and
the first contact point is grounded, or the first contact point is connected to a preset second voltage, the preset second voltage being not equal to the first voltage.

According to still another aspect of the present invention, the storage card socket further comprises:
a locking slot arranged on the base;
an unlocking slot arranged on the base and connected to the locking slot; and
a locking piece arranged at the upper lid, the locking piece being embedded in the locking slot by the unlocking slot so as to lock the upper lid, or the locking piece being entered into the unlocking slot from the locking slot so as to unlock the upper lid.

According to a further still aspect of the present invention, the storage card socket further comprises:
a stopper arranged on the base and positioned at a side opposite to the guide slot for preventing the storage card from being drawn out in a read-write operation.

According to a further still aspect of the present invention, the storage card socket further comprises:
a detecting elastic piece arranged on the base; and
a grounding elastic piece arranged below the detecting elastic piece or at a side of the detecting elastic piece, an interruption signal being generated when the grounding elastic piece is in contact with the detecting elastic piece.

According to a further still aspect of the present invention, there is provided a mobile terminal comprising the above-described storage card socket, wherein the mobile terminal further comprises:
a resistor, one end of which being connected to a preset first voltage, and the other end being electrically connected to the second contact point;
a voltage detecting unit to detect the voltage of the second contact point of the storage card socket; and
a read-write controlling unit to terminate the read-write operation of the storage card when the voltage detecting unit detects that the voltage of the second contact point is equal to the preset first voltage.

According to a further still aspect of the present invention, the surface resistivity of the resistor is 10K Ohms.

According to a further still aspect of the present invention, the mobile terminal further comprises:
an ESD, one end of which being grounded, and the other end being electrically connected to the second contact point and the resistor.

According to a further still aspect of the present invention, the mobile terminal further comprises:
a signal detecting unit to detect whether there exists an interruption signal, the interruption signal being generated by the detecting elastic piece of the storage card socket when being pressed and in contact with the grounding elastic piece;
a storage card determining unit to determine that the storage card is inserted into the storage card socket when the signal detecting unit detects the interruption signal; and
the read-write controlling unit is further used to terminate the read-write operation of the storage card when the storage card determining unit determines that the storage card is inserted into the storage card socket and the voltage detecting unit detects that the voltage of the second contact point is equal to the first voltage.

According to a further still aspect of the present invention, the mobile terminal further comprises:
a signal transmitting unit to transmit a handshaking signal to the storage card, so as to detect whether the contact pins of the storage card socket are in contact with the conductive contact pins of the storage card;
a signal receiving unit to receive the feedback signal of the handshaking signal;
a storage card determining unit to determine that the storage card is inserted into the storage card socket when the signal receiving unit receives the feedback signal; and
the read-write controlling unit is further used to terminate the read-write operation of the storage card when the storage card determining unit determines that the storage card is inserted into the storage card socket and the voltage detecting unit detects that the voltage of the second contact point is equal to the first voltage.

According to a further still aspect of the present invention, the upper lid of the storage card socket has a metal screening structure, and the mobile terminal further comprises:
a capacitive touch sensor connected to the metal screening structure to sense capacitance via the metal screening structure;
a capacitance detecting unit to detect the capacitance of the capacitive touch sensor ; and
the read-write controlling unit terminates the read-write operation of the storage card when the capacitance detecting unit detects that the capacitance of the capacitive touch sensor is greater than a preset capacitance and the voltage detecting unit detects that the voltage of the second contact point is equal to the preset first voltage.

According to a further still aspect of the present invention, there is provided a method for protecting a storage card, the method comprising:
a voltage detecting step: detecting whether the voltage of a second contact point of a storage card socket is equal to a preset first voltage;
a read-write controlling step: terminating the read-write operation of the storage card when it is detected that the voltage of the second contact point is equal to the first voltage; and
an upper lid sliding step: sliding an upper lid of the storage card socket along a guide slot arranged on a base of the storage card socket.

According to a further still aspect of the present invention, the method further comprises the following step after the upper lid sliding step:
an upper lid opening step: unlocking the upper lid by locking means arranged on the storage card socket and opening the upper lid, so as to eject the storage card.

According to a further still aspect of the present invention, the method further comprises:
a signal detecting step: detecting whether there exists an interruption signal, the interruption signal being generated by a detecting elastic piece of the storage card socket when being pressed and in contact with a grounding elastic piece;
a storage card determining step: determining that the storage card is inserted into the storage card socket when the interruption signal is detected; and
terminating the read-write operation of the storage card when it is determined in the storage card determining step that the storage card is inserted into the storage card socket and it is detected in the voltage detecting step that the voltage of the second contact point is equal to the first voltage.

According to a further still aspect of the present invention, the method further comprises:
a signal transmitting step: transmitting a handshaking signal to the storage card, so as to detect whether the contact pins of the storage card socket are in contact with the conductive contact pins of the storage card;
a signal receiving step: receiving the feedback signal of the handshaking signal;
a storage card determining step: determining that the storage card is inserted into the storage card socket when the feedback signal of the handshaking signal is received; and
terminating the read-write operation of the storage card when it is determined in the storage card determining step that the storage card is inserted into the storage card socket and it is detected in the voltage detecting step that the voltage of the second contact point is equal to the first voltage.

According to a further still aspect of the present invention, the method further comprises:
a capacitance detecting step: detecting capacitance by using a metal screening structure of the upper lid; and
terminating the read-write operation of the storage card when the capacitance detected in the capacitance detecting step is greater than a preset capacitance and the voltage of the second contact point detected in the voltage detecting step is equal to the first voltage.

The advantages of the present invention exist in that the voltage of the contact point is detected when the upper lid of the storage card socket is opened or moved, the read-write operation is terminated when the voltage of the contact point is equal to a preset voltage, and the upper lid slides along a guide slot before the storage card is removed; the time delay for terminating the read-write protection may be increased and the storage card is protected in time, reducing the return rate of the storage card.

These and further aspects and features of the present invention will be apparent with reference to the following description and attached drawings. In the description and drawings, particular embodiments of the invention have been disclosed in detail as being indicative of some of the ways in which the principles of the invention may be employed, but it is understood that the invention is not limited correspondingly in scope. Rather, the invention includes all changes, modifications and equivalents coming within the spirit and terms of the appended claims.

Features that are described and/or illustrated with respect to one embodiment may be used in the same way or in a similar way in one or more other embodiments and/or in combination with or instead of the features of the other embodiments.

It should be emphasized that the term "comprises/comprising" when used in this specification is taken to specify the presence of stated features, integers, steps or components but does not preclude the presence or addition of one or more other features, integers, steps, components or groups thereof.

Many aspects of the invention can be better understood with reference to the following drawings. The components in the drawings are not necessarily to scale, emphasis instead being placed upon clearly illustrating the principles of the present invention. To facilitate illustrating and describing some parts of the invention, corresponding portions of the drawings may be exaggerated in size, e.g., made larger in relation to other parts than in an exemplary device actually made according to the invention. Elements and features depicted in one drawing or embodiment of the invention may be combined with elements and features depicted in one or more additional drawings or embodiments. Moreover, in the drawings, like reference numerals designate corresponding parts throughout the several views and may be used to designate like or similar parts in more than one embodiment.

### Brief Description of the Drawings

The drawings are included to provide further understanding of the present invention, which constitute a part of the specification and illustrate the preferred embodiments of the present invention, and are used for setting forth the principles of the present invention together with the description. The same element is represented with the same reference number throughout the drawings. In the drawings:
Figure 1 is a perspective view of the structure of a storage card socket of the embodiments of the present invention;
Figure 2 is an exploded view of the structure of the storage card socket shown in Fig. 1;
Figure 3 is a connection schematic diagram of a first contact point, a second contact point and a resistor when the upper lid of the storage card socket is opened or moved;
Figure 4 is a connection schematic diagram of the first contact point, the second contact point and the resistor when the upper lid of the storage card socket is closed;
Figure 5 is a schematic diagram of part of the structure of the storage card socket shown in Fig. 1;
Figure 6 is a state schematic diagram when the upper lid of the storage card socket is locked;
Figure 7 is a state schematic diagram after the upper lid of the storage card socket is moved;
Figure 8 is a state schematic diagram when the upper lid of the storage card socket is unlocked;
Figure 9 is a schematic diagram showing the principle of the mobile terminal of the embodiments of the present invention;
Figure 10 is a schematic diagram showing the systematic structure of the mobile terminal of the embodiments of the present invention; and
Figure 11 is a flowchart of the method for protecting the storage card of the embodiments of the present invention.

### Detailed Description of the Invention

The interchangeable terms "electronic apparatus" and "electronic device" include portable radio communication apparatus. The term "portable radio communication apparatus", which hereinafter is referred to as a "mobile terminal", "portable electronic device", or "portable communication device", comprises all apparatuses such as mobile telephones, pagers, communicators, electronic organizers, personal digital assistants (PDAs), smart phones, portable communication devices or the like.

In the present application, embodiments of the invention are described primarily in the context of a portable electronic device in the form of a mobile telephone (also referred to as "mobile phone"). However, it shall be appreciated that the invention is not limited to the context of a mobile telephone and may relate to any type of appropriate electronic apparatus having the function of photographing and sound recording. Examples of such electronic apparatus include a media player, a gaming device, a PDA, a computer, and a digital video camera, etc. In the embodiments of the present invention, the storage card may be an SD card, but it is not limited thereto, it may also be other types of storage cards.

In a conventional design, the storage card socket may be divided into a push-pull type and a hinge type. A storage card socket of a hinge type mainly consists of an upper lid and a base, with the upper lid and the base forming a hinge type structure via a pivot, so that the upper lid may be rotated at a certain angle relative to the base for being opened or closed. The embodiments of the present invention are mainly applicable to a storage card socket of a hinge type; however, it is not limited thereto, and the particular structure of the storage card socket may be determined as actually required. The preferred embodiments of the present invention are described as follows in reference to the drawings.

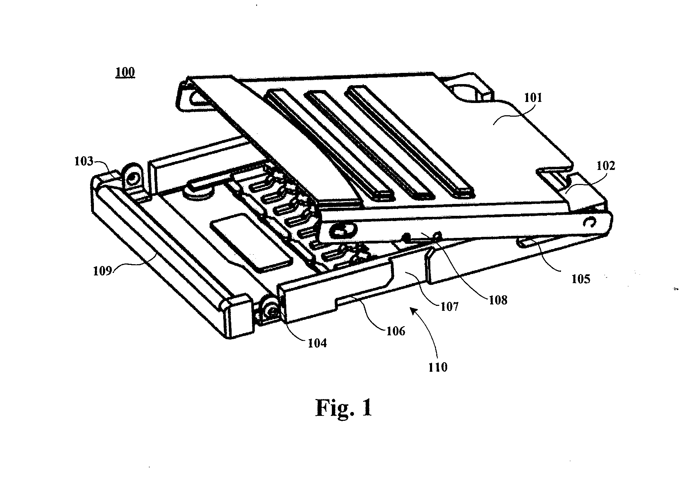

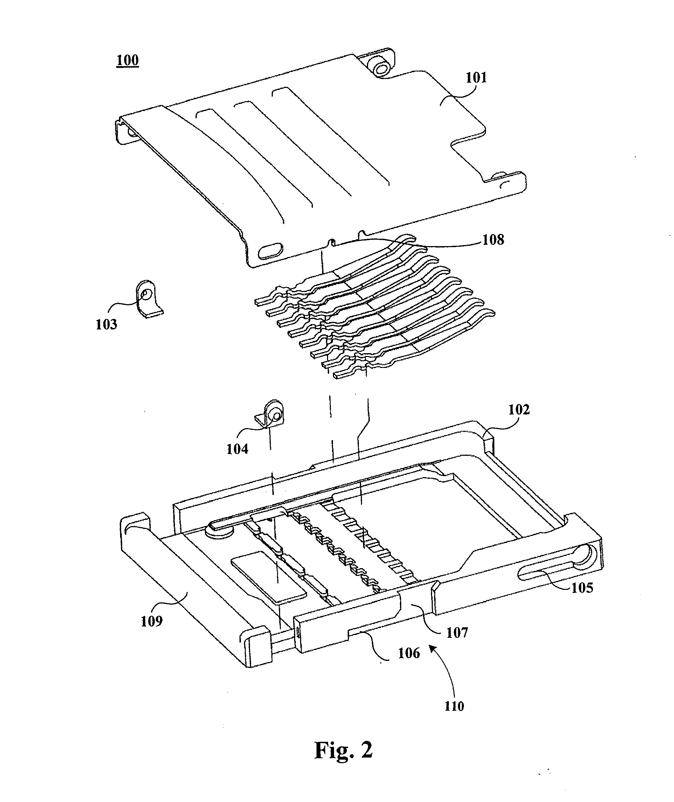

The embodiments of the present invention provide a storage card socket. Fig. 1 shows a perspective view of the structure of the storage card socket, and Fig. 2 shows an exploded view of the storage card socket. As shown in Figs. 1 and 2, the storage card socket 100 comprises an upper lid 101 and a base 102, and the storage card socket 100 further comprises:
a first contact point 103 arranged on the base 102;
a second contact point 104 arranged on the base 102, the second contact point 104 being electrically connected to the first contact point 103 after the upper lid 101 is closed, and electrically disconnected from the first contact point 103 after the upper lid 101 is opened or moved; and
a guide slot 105 arranged on the base 102, the guide slot being positioned at a side of a connecting part for connecting the base 102 and the upper lid 101, the connecting part being positioned in the guide slot 105 so that the upper lid 101 is slidable along the guide slot 105.

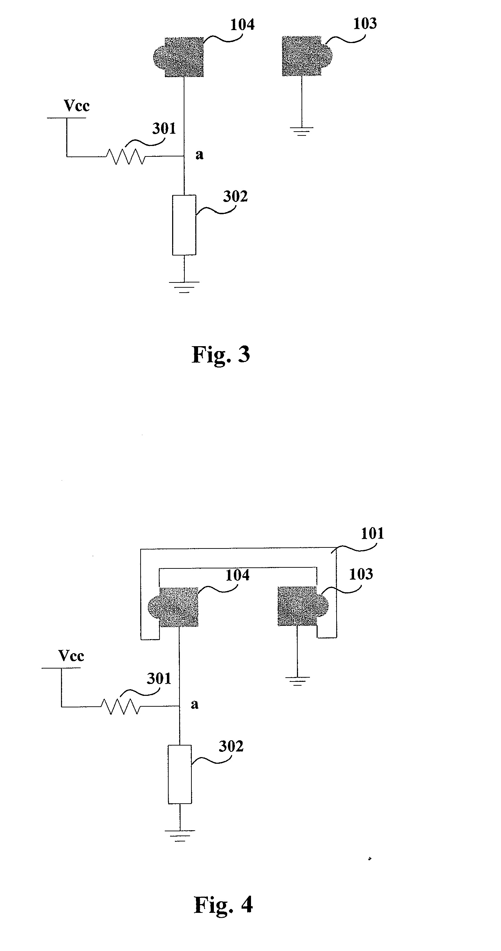

As shown in Fig. 1, the first contact point 103 and the second contact point 104 may be arranged opposite to each other at a side of the base 102, and the guide slot 105 is arranged at the other side of the base 102. In the illustrated embodiment, the first contact point 103 is arranged at the left side of the base 102 and the second contact point 104 is arranged at the right side of the base 102. The first contact point 103 and the second contact point are lock pins and have a function of locking the upper lid 101, e.g., as is shown in Fig. 4. However, it is not limited thereto, and the particular manner of arrangement may be determined as actually required.

In implementation, the upper lid 101 may be formed of a conductive metal, thereby the first contact point 103 and the second contact point 104 being electrically connected via the upper lid 101 after the upper lid 101 is closed, while the first contact point 103 being electrically disconnected from the second contact point 104 when the upper lid 101 is opened or moved. However, it is not limited thereto, and particular manner of implementation may be determined as actually required. For example, a metal wire may be arranged at a position of the upper lid 101 corresponding to the first contact point 103 and the second contact point 104.

Figure 3 is a connection schematic diagram of the first contact point 103, the second contact point 104 and a resistor 301 when the upper lid 101 is opened or moved, and Figure 4 is a connection schematic diagram of the first contact point 103, the second contact point 104 and the resistor 301 when the upper lid 101 is closed.

As shown in Figs. 3 and 4, the second contact point 104 is electrically connected to the resistor 301, and the first contact point 103 may be grounded; and one end of the resistor 301 is connected to a preset first voltage V_{CC}, and the other end is connected to the second contact point 104 at a point a. The resistor 301 may be integrated into the base 102, and may also be integrated into a mobile terminal comprising the storage card socket. Particular manners of arrangement may be determined as actually required.

As shown in Fig. 3, when the upper lid 101 is opened or moved, the first contact point 103 is electrically disconnected from the second contact point 104, with the voltage of the first contact point 103 being zero, and the voltage of the second contact point 104 being V_{CC}. At this time, it can detected that the voltage at the point a is V_{CC} and thus, it can be determined that the upper lid 101 is opened or moved.

As shown in Fig. 4, when the upper lid 101 is closed, the first contact point 103 is electrically connected to the second contact point 104, with the voltage of the first contact point 103 being zero, and the voltage of the second contact point 104 falling to zero or close to zero under the effect of the resistor 301. At this time, it can detected that the voltage at the point a is not equal to V_{CC} and thus, it can be determined that the upper lid 101 is closed.

In implementation, the first contact point 103 is not limited to be grounded, and it may also be connected to a preset second voltage which is not equal to the first voltage. When the upper lid is opened or moved, the first contact point 103 is electrically disconnected from the second contact point 104, with the voltage of the first contact point 103 being the second voltage, and the voltage of the second contact point 104 being the first voltage; and when the upper lid is closed, the first contact point 103 is electrically connected to the second contact point 104, with the voltage of the first contact point 103 being the second voltage, and the voltage of the second contact point 104 being not equal to the first voltage under the effect of the resistor 301, for example, being equal to or close to the second voltage.

It can be seen from above that the voltage of the second contact point 104 may be altered by the voltage of the first contact point 103 and the preset first voltage. The voltage of the second contact point 104, i.e. the voltage at the point a as shown in Figs. 3 and 4, may be detected, thereby providing an indication of the state of the upper lid 101. After it is detected that the voltage of the second contact point 104 is equal to the preset first voltage V_{CC}, it can be determined that the upper lid 101 is opened or moved, thereby terminating the read-write operation of the storage card, and protecting the storage card in time.

In this embodiment, the resistance, sometimes referred to as surface resistivity, of the resistor 301 may be in the range of 1 to 100K Ohms. Preferably, the surface resistivity of the resistor is 10K Ohms.

Furthermore, the second contact point 104 may be electrically connected to an Electro-Static Discharge device (ESD) 302. As shown in Figs. 3 and 4, one end of the ESD 302 is grounded, and other end is electrically connected to the second contact point 104 and the resistor 301, i.e. being connected at the point a. With the ESD 302, the effect of the static electricity on the detection of voltage may be further eliminated, improving the accuracy of the detection.

In implementation, both the resistor 301 and the ESD 302 may be integrated into the base 102. However, it is not limited thereto, and particular manners of implementation may be determined as actually required. In addition, a plurality of first contact points or second contact points may be arranged, or contact points may be arrange at different positions of the storage card socket, thereby further improving the precision and reliability of the detection.

In this embodiment, the voltages of the contact points are detected when the upper lid of the storage card socket is opened or moved, the read-write operation is terminated when the voltages of the contact points are equal to the preset voltages, and the upper lid slides along the guide slot before the storage card is removed, thereby increasing the time delay for terminating the read-write protection, protecting the storage card in time, and reducing the return rate of the storage card.

As shown in Figs. 1 and 2, the storage card socket 100 further comprises locking means 110 arranged at a side of the storage card socket, the locking means comprising:
a locking slot 106 arranged on the base 102;
an unlocking slot 107 arranged on the base 102 and connected to the locking slot 106; and
a locking piece 108 arranged at the upper lid 101, the locking piece 108 being movable into position in the locking slot 106 via the unlocking slot 107 so as to lock the upper lid 101, or the locking piece 108 being movable into position in the unlocking slot 107 from the locking slot 106 so as to unlock the upper lid 101.

With the guide slot 105 and locking means 110, after it is detected that the upper lid 101 is moved and before the upper lid 101 of the storage card socket is opened, the upper lid 101 slides along the guide slot 105 for a certain distance and then is unlocked by the locking means, thereby obtaining further time delay, providing sufficient time for terminating the read-write operation of the storage card.

As shown in Figs. 1 and 2, the storage card socket 100 further comprises:
a stopper 109 arranged on the base 102 and positioned at a side opposite to the guide slot 105 for preventing the storage card from being drawn out in a read-write operation.

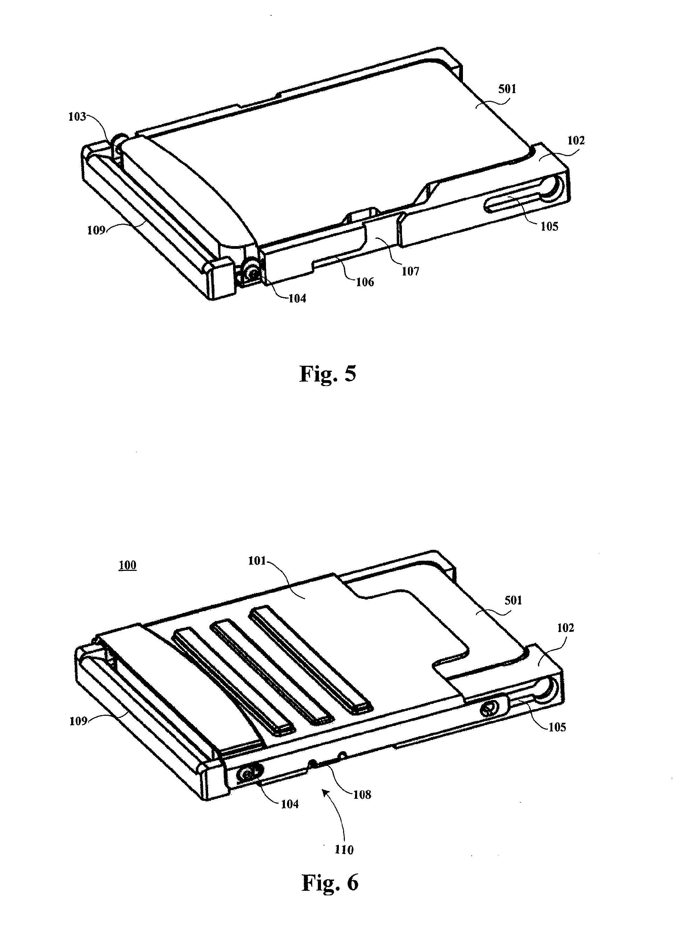

Figure 5 is a schematic diagram of part of the structure of the storage card socket of the embodiments of the present invention, in which the upper lid is not shown and a storage card 501 is inserted into the base 102. As shown in Fig. 5, the guide slot 105 is arranged at a side where the base and the upper lid are connected, and the stopper 109 is arranged at the other side. The stopper 109 may prevent the storage card 501 from being suddenly drawn out by the user in a read-write operation.

In this embodiment, when the upper lid 101 of the storage card socket is closed, the upper lid 101 may be pushed, so that the upper lid 101 slides towards the stopper 109, embedding the locking piece 108 of the upper lid 101 into the locking slot 106. At this time, the upper lid 101 is locked by the locking means 110 (Fig. 1).

Figure 6 is a state schematic diagram when the upper lid of the storage card socket is locked. As shown in Fig. 6, the storage card 501 is inserted into the storage card socket 100, and the locking piece 108 is embedded into the locking slot 106 (not shown), locking the upper lid 101. Since the upper lid 101 is closed, the first contact point 103 (not shown) is electrically connected to the second contact point 104. At this time, the voltage of the second contact point 104 is not equal to the preset first voltage V_{CC}.

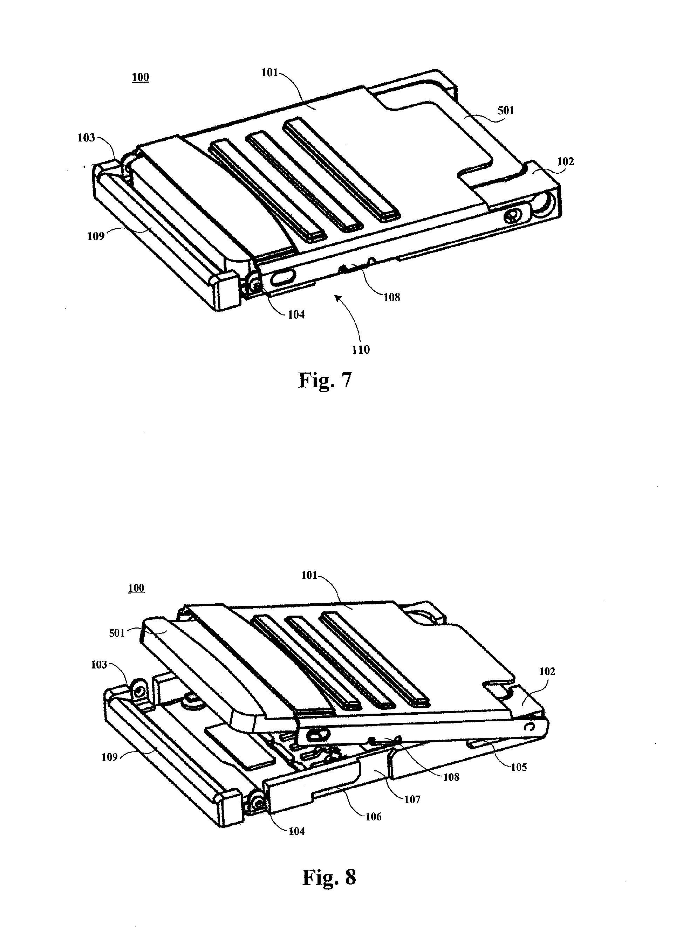

Figure 7 is a state schematic diagram after the upper lid 101 of the storage card socket 100 is moved. As shown in Fig. 7, the upper lid 101 is moved so that the first contact point 103 is electrically disconnected from the second contact point 104. At this time, the voltage of the second contact point 104 is equal to the preset first voltage V_{CC}, thereby terminating the read-write operation of the storage card 501 in hundreds of milliseconds. And also, the upper lid 101 continues to slide along the guide slot 105 (not shown), and the locking piece 108 may enter into the unlocking slot 107 (not shown) from the locking slot 106 (not shown).

Figure 8 is a state schematic diagram when the upper lid 101 of the storage card socket 100 is unlocked. As shown in Fig. 8, after the locking piece 108 enters into the unlocking slot 107 from the locking slot 106, the upper lid 101 is opened, and the storage card 501 is ejected. Since the upper lid 101 has slid a certain distance before the storage card 501 is removed, there is sufficient time for terminating the read-write operation of the storage card.

It can be seen from the above embodiment that the read-write operation of the storage card is terminated when it is detected that the upper lid of the storage card socket is opened or moved, and the upper lid of the storage card socket slides for a certain distance before the storage card is removed, thereby protecting the storage card in time and reducing the return rate of the storage card.

In one embodiment, before the read-write operation of the storage card is terminated, whether the storage card is inserted into the storage card socket may be detected for further improving the accuracy of the detection. The storage card socket may further comprise:
a detecting elastic piece arranged on the base; and
a grounding elastic piece arranged below the detecting elastic piece or at a side of the detecting elastic piece, an interruption signal being generated when the grounding elastic piece is in contact with the detecting elastic piece.

In implementation, the detecting elastic piece is an elastic metal piece, and the grounding elastic piece is a grounded metal piece. When the storage card is inserted into the storage card socket, the detecting elastic piece may be pressed downwards; and when the detecting elastic piece is pressed, it is in contact with the grounding elastic piece and electrically connected to the grounding elastic piece, thereby generating an interruption signal. Refer to the prior art for the generation of the interruption signal, which shall not be described any further.

In implementation, whether an interruption signal is generated may be detected, and if an interruption signal is detected, it can be determined that the storage card is inserted into the storage card socket. Therefore, the read-write operation of the storage card is terminated when the storage card is inserted into the storage card socket and the voltage of the second contact point is equal to the preset first voltage. When the storage card is not inserted into the storage card socket, the read-write control is not performed, for further improving the accuracy of the detection.

The embodiments of the present invention further provide a mobile terminal comprising the above-described storage card socket 100, wherein the mobile terminal further comprises a resistor, one end of which being connected to a preset first voltage, and the other end being electrically connected to the second contact point of the storage card socket . Preferably, the surface resistivity or resistance of the resistor may be 10K Ohms.

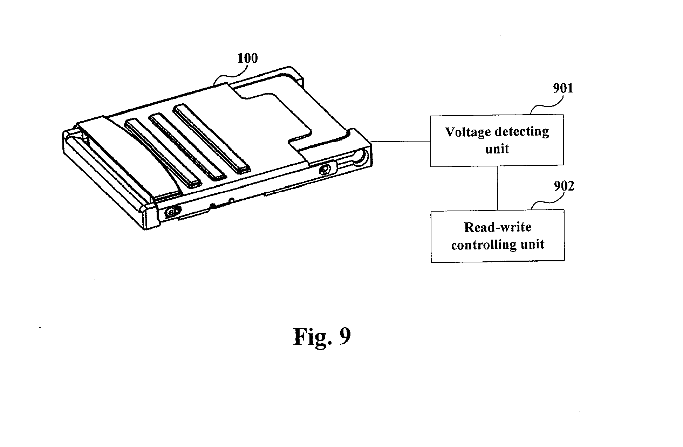

As shown in Fig. 9, the mobile terminal further comprises:
a voltage detecting unit 901 to detect the voltage of the second contact point 104 (Fig. 1) of the storage card socket 100; and
a read-write controlling unit 902 to terminate the read-write operation of the storage card when the voltage detecting unit 901 detects that the voltage of the second contact point is equal to the preset first voltage.

In this embodiment, the mobile terminal may further comprise an ESD, one end of which being grounded, and the other end being electrically connected to the second contact point and the resistor.

In one embodiment, before the read-write operation of the storage card is terminated, whether the storage card is inserted into the storage card socket may be detected for further improving the accuracy of the detection. The mobile terminal may further comprise a signal detecting unit and a storage card determining unit, wherein
the signal detecting unit is used to detect whether there exists an interruption signal, the interruption signal being generated by the detecting elastic piece of the storage card socket when being pressed and in contact with the grounding elastic piece;
the storage card determining unit is used to determine that the storage card is inserted into the storage card socket when the signal detecting unit detects the interruption signal; and
the read-write controlling unit 902 is further used to terminate the read-write operation of the storage card when the storage card determining unit determines that the storage card is inserted into the storage card socket and the voltage detecting unit 901 detects that the voltage of the second contact point is equal to the first voltage.

In implementation, the detecting elastic piece and grounding elastic piece of the storage card socket are as described above, which shall not be described any further.

In another embodiment, before the read-write operation of the storage card is terminated, whether the storage card is inserted into the storage card socket may be detected for further improving the accuracy of the detection. The mobile terminal may further comprise a signal transmitting unit and a signal receiving unit, wherein
the signal transmitting unit is used to transmit a handshaking signal to the storage card, so as to detect whether the contact pins of the storage card socket are in contact with the conductive contact pins of the storage card;
the signal receiving unit is used to receive the feedback signal of the handshaking signal and to determine that the storage card is inserted into the storage card socket when the feedback signal is received; and
the read-write controlling unit 902 is further used to terminate the read-write operation of the storage card when the signal receiving unit determines that the storage card is inserted into the storage card socket and the voltage detecting unit 901 detects that the voltage of the second contact point is equal to the preset first voltage.

In implementation, the signal transmitting unit and the signal receiving unit may be integrated in the printed circuit board of the mobile terminal. After the storage card is inserted into the storage card socket, the contact pins of the storage card socket are in contact with the conductive pins of the storage card, forming a signal feedback circuit between the signal transmitting unit, the signal receiving unit and the storage card.

Thus, the signal transmitting unit may continually transmit a handshaking signal for test to the storage card. If the signal receiving unit detects the feedback signal of the handshaking signal, the handshaking is successful, thereby determining that the storage card is inserted into the storage card socket. And if the signal receiving unit does not detect the feedback signal of the handshaking signal, the handshaking is unsuccessful, thereby determining that the storage card is not inserted into the storage card socket.

Thus, the read-write operation of the storage card is terminated when the storage card is inserted into the storage card socket and the voltage of the second contact point is equal to the preset first voltage. When the storage card is not inserted into the storage card socket, the read-write control is not performed, for further improving the accuracy of the detection.

In another embodiment, the upper lid 101 of the storage card socket 100 has a metal screening structure, and before the read-write operation of the storage card is terminated, whether there exists a finger in contact with the upper lid 101 may be further detected, for further improving the accuracy of the detection. The mobile terminal may further comprise a capacitive touch sensor and a capacitance detecting unit, wherein

the capacitive touch sensor is connected to the metal screening structure to sense capacitance via the metal screening structure;

the capacitance detecting unit is used to detect the capacitance of the capacitive touch sensor; and

the read-write controlling unit 902 is further used to terminate the read-write operation of the storage card when the capacitance detecting unit detects that the capacitance of the capacitive touch sensor is greater than a preset capacitance and the voltage detecting unit 901 detects that the voltage of the second contact point is equal to the preset first voltage.

In implementation, when a finger of a user is in contact with the metal screening structure of the upper lid 101, the electrical field of the human body will cause a capacitance to be formed between the finger and the metal screening structure, since tissues of the skin of the human body are full of conductive electrolytes; and when the finger is not in contact with the metal screening structure, the capacitive touch sensor does not detect the generated capacitance. The size of the preset capacitance may be determined according to an actual empirical value.

Thus, whether the upper lid 101 of the storage card socket 100 is abnormal may be determined according to the capacitance detected by the capacitive touch sensor. The read-write operation of the storage card is terminated when the detected capacitance is greater than the preset capacitance and the voltage of the second contact point is equal to the preset first voltage, further improving the accuracy of the detection.

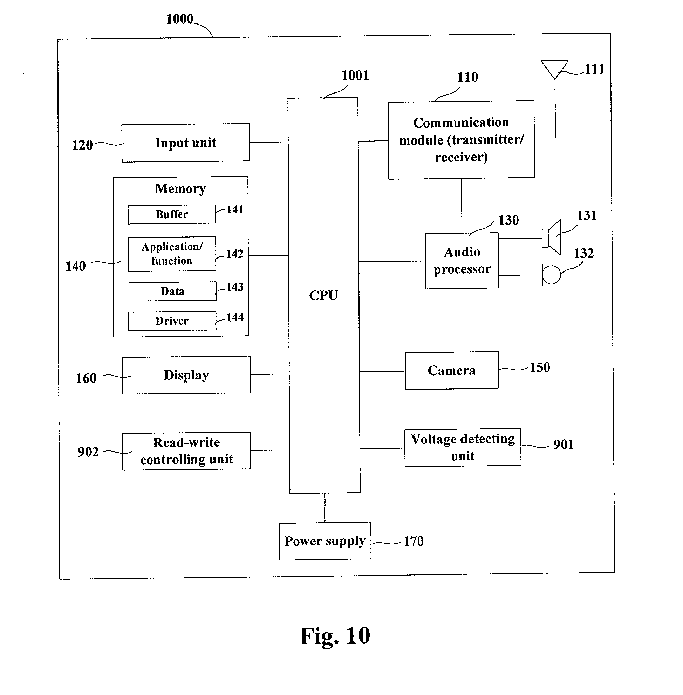

Figure 10 is a schematic block diagram showing the systematic structure of the mobile terminal 1000 of the embodiments of the present invention, in which the above-described voltage detecting unit 901 and read-write controlling unit 902 are included. Such a figure is just exemplary and other types of structures may also be used for supplementing or replacing this structure, so as to implement the function of telecommunications or other functions.

As shown in Fig. 10, the mobile terminal 1000 comprises a CPU 1001, a communication module 110, an input unit 120, an audio processing unit 130, a memory 140, a camera 150, a display 160, a power supply 170, the voltage detecting unit 901, and the read-write controlling unit 902.

The read-write controlling unit 902 may be directly connected to the voltage detecting unit 901, or may be connected to the voltage detecting unit 901 via the CPU 1001. The read-write controlling unit 902 may also be integrated into the CPU 1001.

The CPU 1001 (also referred to as a controller or an operational control, which comprises a microprocessor or other processing devices and/or logic devices) receives input and controls each part and operation of the mobile terminal 1000. The input unit 120 provides input to the CPU 1001. The input unit 120 may be for example a key or touch input device. The camera 150 is used to take image data and provide the taken image data to the CPU 1001 for use in a conventional manner, for example, for storage, and transmission, etc.

The power supply 170 is used to supply power to the mobile terminal 1000. And the display 160 is used to display the objects to be displayed, such as images, and characters, etc. The display may be for example an LCD display, but it is not limited thereto.

The memory 140 is coupled to the CPU 1001. The memory 140 may be a solid memory, such as a read-only memory(ROM), a random access memory(RAM), and a SIM card, etc., and may also be such a memory that stores information even when the power is interrupted, may be optionally erased and provided with more data. Examples of such a memory are sometimes referred to as an EPROM, etc. The memory 140 may also be certain other types of devices. The memory 140 comprises a buffer memory 141 (sometimes referred to as a buffer). The memory 140 may comprise an application/function storing portion 142 used to store application programs and function programs, or to execute the flow of the operation of the mobile terminal 1000 via the CPU 1001.

The memory 140 may further comprise a data storing portion 143 used to store data, such as a contact person, digital data, pictures, voices and/or any other data used by the mobile terminal 1000. A driver storing portion 144 of the memory 140 may comprise various types of drivers of the mobile terminal 1000 for the communication function and/or for executing other functions (such as application of message transmission, and application of directory, etc.) of the mobile terminal 1000.

The communication module 110 is a transmitter/receiver 110 transmitting and receiving signals via an antenna 111. The communication module (transmitter/receiver) 110 is coupled to the CPU 1001 to provide input signals and receive output signals, this being similar to the case in a conventional mobile phone.

A plurality of communication modules 110, such as a cellular network module, a Bluetooth module, and/or wireless local network module, etc., may be provided in the same mobile terminal in accordance with various communication technologies. The communication module (transmitter/receiver) 110 is also coupled to a loudspeaker 131 and a microphone 132 via the audio processing unit 130, for providing audio output via the loudspeaker 131 and receiving the audio input from the microphone 132, thereby achieving common telecommunications function. The audio processing unit 130 is further coupled to the CPU 1001, thereby enabling the recording of voices in this device via the microphone 132 and playing the voices stored in this device via the loudspeaker 131.

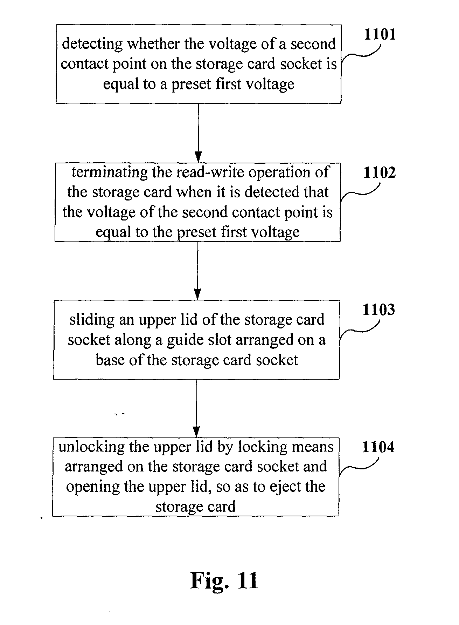

The embodiments of the present invention further provide a method for protecting a storage card, which is applicable to the above-described mobile terminal. As shown in Fig. 11, the method comprises:
a voltage detecting step 1101: detecting whether the voltage of a second contact point of a storage card socket is equal to a preset first voltage;
a read-write controlling step 1102: terminating the read-write operation of the storage card when it is detected that the voltage of the second contact point is equal to the preset first voltage; and
an upper lid sliding step 1103: sliding an upper lid of the storage card socket along a guide slot arranged on a base of the storage card socket.

As shown in Fig. 11, after step 1103, the method further comprises:
an upper lid opening step 1104: unlocking the upper lid by locking means arranged on the storage card socket and opening the upper lid, so as to eject the storage card.

In one embodiment, before the read-write operation of the storage card is terminated in the read-write controlling step 1102, the method further comprises:
a signal detecting step: detecting whether there exists an interruption signal, the interruption signal being generated by a detecting elastic piece of the storage card socket when being pressed and in contact with a grounding elastic piece;
a storage card determining step: determining that the storage card is inserted into the storage card socket when the interruption signal is detected; and
performing again the read-write controlling step 1102 and terminating the read-write operation of the storage card when it is determined in the storage card determining step that the storage card is inserted into the storage card socket and it is detected in the voltage detecting step 1101 that the voltage of the second contact point is equal to the preset first voltage.

In another embodiment, before the read-write operation of the storage card is terminated in the read-write controlling step 1102, the method further comprises:
a signal transmitting step: transmitting a handshaking signal to the storage card, so as to detect whether the contact pins of the storage card socket are in contact with the conductive contact pins of the storage card;
a signal receiving step: receiving the feedback signal of the handshaking signal;
a storage card determining step: determining that the storage card is inserted into the storage card socket when the feedback signal of the handshaking signal is received; and
performing again the read-write controlling step 1102 and terminating the read-write operation of the storage card when it is determined in the storage card determining step that the storage card is inserted into the storage card socket and it is detected in the voltage detecting step 1101 that the voltage of the second contact point is equal to the preset first voltage.

In a further embodiment, before the read-write operation of the storage card is terminated in the read-write controlling step 1102, the method further comprises:
a capacitance detecting step: detecting capacitance by using a metal screening structure of the upper lid; and
performing again the read-write controlling step 1102 and terminating the read-write operation of the storage card when the capacitance detected in the capacitance detecting step is greater than the preset capacitance and the voltage of the second contact point detected in the voltage detecting step 1101 is equal to the preset first voltage.

It can be seen from the above embodiments that the read-write operation of the storage card is terminated when it is detected that the upper lid of the storage card socket is opened or moved, and the upper lid of the storage card socket slides a certain distance before the storage card is removed, thereby protecting the storage card in time and reducing the return rate of the storage card.

The preferred embodiments of the present invention are described above with reference to the drawings. The many features and advantages of the embodiments are apparent from the detailed specification and, thus, it is intended by the appended claims to cover all such features and advantages of the embodiments that fall within the true spirit and scope thereof. Further, since numerous modifications and changes will readily occur to those skilled in the art, it is not desired to limit the inventive embodiments to the exact construction and operation illustrated and described, and accordingly all suitable modifications and equivalents may be resorted to, falling within the scope thereof.

It should be understood that each of the parts of the present invention may be implemented by hardware, software, firmware, or a combination thereof. In the above embodiments, multiple steps or methods may be realized by software or firmware that is stored in the memory and executed by an appropriate instruction executing system. For example, if it is realized by hardware, it may be realized by any one of the following technologies known in the art or a combination thereof as in another embodiment: a discrete logic circuit having a logic gate circuit for realizing logic functions of data signals, application-specific integrated circuit having an appropriate combined logic gate circuit, a programmable gate array (PGA), and a field programmable gate array (FPGA), etc.

The description or blocks in the flowcharts or of any process or method in other manners may be understood as being indicative of comprising one or more modules, segments or parts for realizing the codes of executable instructions of the steps in specific logic functions or processes, and that the scope of the preferred embodiments of the present invention comprise other implementations, wherein the functions may be executed in manners different from those shown or discussed, including executing the functions according to the related functions in a substantially simultaneous manner or in a reverse order, which should be understood by those skilled in the art to which the present invention pertains.

The logic and/or steps shown in the flowcharts or described in other manners here may be, for example, understood as a sequencing list of executable instructions for realizing logic functions, which may be implemented in any computer readable medium, for use by an instruction executing system, device or apparatus (such as a system including a computer, a system including a processor, or other systems capable of extracting instructions from an instruction executing system, device or apparatus and executing the instructions), or for use in combination with the instruction executing system, device or apparatus.

The above literal description and drawings show various features of the present invention. It should be understood that those skilled in the art may prepare appropriate computer codes to carry out each of the steps and processes as described above and shown in the drawings. It should be also understood that all the terminals, computers, servers, and networks may be any type, and the computer codes may be prepared according to the disclosure to carry out the present invention by using the apparatus.

Particular embodiments of the present invention have been disclosed herein. Those skilled in the art will readily recognize that the present invention is applicable in other environments. In practice, there exist many embodiments and implementations. The appended claims are by no means intended to limit the scope of the present invention to the above particular embodiments. Furthermore, any reference to "a device to..." is an explanation of device plus function for describing elements and claims, and it is not desired that any element using no reference to "a device to..." is understood as an element of device plus function, even though the wording of "device" is included in that claim.

Although a particular preferred embodiment or embodiments have been shown and the present invention has been described, it is obvious that equivalent modifications and variants are conceivable to those skilled in the art in reading and understanding the description and drawings. Especially for various functions executed by the above elements (portions, assemblies, apparatus, and compositions, etc.), except otherwise specified, it is desirable that the terms (including the reference to "device") describing these elements correspond to any element executing particular functions of these elements (i.e. functional equivalents), even though the element is different from that executing the function of an exemplary embodiment or embodiments illustrated in the present invention with respect to structure. Furthermore, although the a particular feature of the present invention is described with respect to only one or more of the illustrated embodiments, such a feature may be combined with one or more other features of other embodiments as desired and in consideration of advantageous aspects of any given or particular application.

## Claims

1. A storage card socket comprising an upper lid and a base, wherein the storage card socket further comprises:
a first contact point arranged on the base;
a second contact point arranged on the base, the second contact point being electrically connected to the first contact point after the upper lid is closed, and electrically disconnected from the first contact point after the upper lid is opened or moved; and
a guide slot arranged on the base, the guide slot being positioned at a side of a connecting part for connecting the base and the upper lid, the connecting part being embedded in the guide slot so that the upper lid is slidable along the guide slot.

2. The storage card socket according to claim 1, wherein the second contact point is electrically connected to an end of a resistor, and the other end of the resistor is connected to a preset first voltage; and
the first contact point is grounded, or the first contact point is connected to a preset second voltage, the preset second voltage being not equal to the first voltage.

3. The storage card socket according to either one of claims 1 or 2, wherein the storage card socket further comprises:
a locking slot arranged on the base;
an unlocking slot arranged on the base and connected to the locking slot; and
a locking piece arranged at the upper lid, the locking piece being positionable in the locking slot via the unlocking slot so as to lock the upper lid, or the locking piece being movable into the unlocking slot from the locking slot so as to unlock the upper lid.

4. The storage card socket according to any one of claims 1-3, wherein the storage card socket further comprises:
a stopper arranged on the base and positioned at a side opposite to the guide slot for preventing the storage card from being drawn out in a read-write operation.

5. The storage card socket according to any one of claims 1-4, wherein the storage card socket further comprises:
a detecting elastic piece arranged on the base; and
a grounding elastic piece arranged below the detecting elastic piece or at a side of the detecting elastic piece, an interruption signal being generated when the grounding elastic piece is in contact with the detecting elastic piece.

6. A mobile terminal comprising the storage card socket as claimed any one of claims 1-5, wherein the mobile terminal further comprises:
a resistor, one end of which being connected to a preset first voltage, and the other end being electrically connected to the second contact point of the storage card socket;
a voltage detecting unit to detect the voltage of the second contact point of the storage card socket; and
a read-write controlling unit to terminate the read-write operation of the storage card when the voltage detecting unit detects that the voltage of the second contact point is equal to the preset first voltage.

7. The mobile terminal according to claim 6, wherein the mobile terminal further comprises:
an ESD, one end of which being grounded, and the other end being electrically connected to the second contact point and the resistor.

8. The mobile terminal according to either one of claims 6 or 7, wherein the mobile terminal further comprises:
a signal detecting unit to detect whether there exists an interruption signal, the interruption signal being generated by the detecting elastic piece of the storage card socket when being pressed and in contact with the grounding elastic piece;
a storage card determining unit to determine that the storage card is inserted into the storage card socket when the signal detecting unit detects the interruption signal; and
the read-write controlling unit is further used to terminate the read-write operation of the storage card when the storage card determining unit determines that the storage card is inserted into the storage card socket and the voltage detecting unit detects that the voltage of the second contact point is equal to the first voltage.

9. The mobile terminal according to any one of claims 6-8, wherein the mobile terminal further comprises:
a signal transmitting unit to transmit a handshaking signal to the storage card, so as to detect whether the contact pins of the storage card socket are in contact with the conductive contact pins of the storage card;
a signal receiving unit to receive the feedback signal of the handshaking signal;
a storage card determining unit to determine that the storage card is inserted into the storage card socket when the signal receiving unit receives the feedback signal; and
the read-write controlling unit is further used to terminate the read-write operation of the storage card when the storage card determining unit determines that the storage card is inserted into the storage card socket and the voltage detecting unit detects that the voltage of the second contact point is equal to the first voltage.

10. The mobile terminal according to any one of claims 6-9, wherein the upper lid of the storage card socket has a metal screening structure, and the mobile terminal further comprises:
a capacitive touch sensor connected to the metal screening structure to sense capacitance via the metal screening structure;
a capacitance detecting unit to detect the capacitance of the capacitive touch sensor; and
the read-write controlling unit is further used to terminate the read-write operation of the storage card when the capacitance detecting unit detects that the capacitance of the capacitive touch sensor is greater than a preset capacitance and the voltage detecting unit detects that the voltage of the second contact point is equal to the preset first voltage.

11. A method for protecting a storage card, the method comprising:
a voltage detecting step: detecting whether the voltage of a second contact point of a storage card socket is equal to a preset first voltage;
a read-write controlling step: terminating the read-write operation of the storage card when it is detected that the voltage of the second contact point is equal to the first voltage; and
an upper lid sliding step: sliding an upper lid of the storage card socket along a guide slot arranged on a base of the storage card socket.

12. The method according to claim 11, wherein the method further comprises the following step after the upper lid sliding step:
an upper lid opening step: unlocking the upper lid by locking means arranged on the storage card socket and opening the upper lid, so as to eject the storage card.

13. The method according to either one of claims 11 or 12, wherein the method further comprises:
a signal detecting step: detecting whether there exists an interruption signal, the interruption signal being generated by a detecting elastic piece of the storage card socket when being pressed and in contact with a grounding elastic piece;
a storage card determining step: determining that the storage card is inserted into the storage card socket when the interruption signal is detected; and
terminating the read-write operation of the storage card when it is determined in the storage card determining step that the storage card is inserted into the storage card socket and it is detected in the voltage detecting step that the voltage of the second contact point is equal to the first voltage.

14. The method according to any one of claims 11-13, wherein the method further comprises:
a signal transmitting step: transmitting a handshaking signal to the storage card, so as to detect whether the contact pins of the storage card socket are in contact with the conductive contact pins of the storage card;
a signal receiving step: receiving the feedback signal of the handshaking signal;
a storage card determining step: determining that the storage card is inserted into the storage card socket when the feedback signal of the handshaking signal is received; and
terminating the read-write operation of the storage card when it is determined in the storage card determining step that the storage card is inserted into the storage card socket and it is detected in the voltage detecting step that the voltage of the second contact point is equal to the first voltage.

15. The method according to any one of claims 11-14, wherein the method further comprises:
a capacitance detecting step: detecting capacitance by using a metal screening structure of the upper lid; and
terminating the read-write operation of the storage card when the capacitance detected in the capacitance detecting step is greater than a preset capacitance and the voltage of the second contact point detected in the voltage detecting step is equal to the first voltage.
